Europäisches Patentamt

European Patent Office

Office européen des brevets

(11) Veröffentlichungsnummer: **0 352 660**
**A2**

(12) **EUROPÄISCHE PATENTANMELDUNG**

(21) Anmeldenummer: **89113460.3**

(22) Anmeldetag: **21.07.89**

(51) Int. Cl.⁴: **H02J 13/00**

(30) Priorität: **27.07.88 AT 1908/88**

(43) Veröffentlichungstag der Anmeldung:
**31.01.90 Patentblatt 90/05**

(84) Benannte Vertragsstaaten:
**AT CH DE ES FR GR IT LI NL**

(71) Anmelder: **Siemens Aktiengesellschaft Österreich**
**Siemensstrasse 88 - 92**
**A-1210 Wien(AT)**

(84) **ES GR IT NL**

Anmelder: **UHER AKTIENGESELLSCHAFT FÜR ZÄHLER UND ELEKTRONISCHE GERÄTE**
**Mooslackengasse 17**
**A-1190 Wien(AT)**

(84) **CH DE FR LI AT**

(72) Erfinder: **Kalny, Friedrich**
**Jenbachgasse 46**
**A-1130 Wien(AT)**

(54) Verfahren und Vorrichtung zum Empfangen und Filtern eines tonfrequenten Eingangssignals mit mindestens einer Steuerfrequenz.

(57) Bei einem Rundsteuerempfänger wird das von einem Tiefpaßfilter begrenzte Eingangssignal mit einer Steuerfrequenz (SF) auf eine Modulationsfrequenz (MF) moduliert und in eine Zwischenfrequenzlage angehoben. Über ein erstes Bandpaßfilter wird ein Seitenband (SB) selektiert und mit einer Demodulationsfrequenz (DF) rückverschoben. Ein zweiter Bandpaßfilter grenzt das Eingangssignal zur Analyse endgültig ein. Durch Variation der Modulationsfrequenz (MF) kann der Rundsteuerempfänger an unterschiedliche Steuerfrequenzen (SF) angepaßt werden. Der Analysator ab dem Zwischenfrequenzbereich bleibt jeweils gleich. Wenn das Eingangssignal durch die Demodulation unter die ursprüngliche Steuerfrequenz (SF) rückverschoben wird, sind die Anforderungen an Güte und Stabilität der Filter leichter zu erfüllen, als bei einer direkten Verarbeitung ohne Zwischenfrequenz (ZF).

FIG 3

## Verfahren und Vorrichtung zum Empfangen und Filtern eines tonfrequenten Eingangssignals mit mindestens einer Steuerfrequenz

Die Erfindung betrifft ein verfahren zum Empfangen und Filtern eines tonfrequenten Eingangssignals mit mindestens einer Steuerfrequenz, die aus einem Frequenzband ausgewählt und festgelegt wird.

Bei Rundsteueranlagen werden Steuerimpulse im allgemeinen mit einer Steuerfrequenz aus dem Bereich von 160 - 2000 Hz übertragen. Das Eingangssignal wird im Empfänger aus den überlagerten Störsignalen durch elektromechanische oder elektronische Schwingungsanordnungen herausgefiltert und detektiert. Bei diesem Verfahren muß für jede verwendete Steuerfrequenz ein eigens angepaßter Empfänger entworfen und gebaut werden.

Zur programmierbaren Anpassung der Empfänger an die jeweilige Steuerfrequenz mit unterschiedlicher Bandbreite und Ansprechempfindlichkeit können digitale Filter verwendet werden. Die Signalerkennung in Rundsteueranlagen wird jedoch durch große Störamplituden erschwert. Insbesondere bei der Netzfrequenz und den dazugehörigen Oberschwingungen ist die auftretende Summen-Eingangsspannung etwa 300 - 1000 mal größer als das noch mit Sicherheit zu erkennende Nutzsignal. Bei diesem schlechten Signal/Rauschverhältnis ist zur Filterrechnung das Eingangssignal mit großer Stellenzahl zu digitalisieren. Eine Verwendung analoger und steuerfrequenzabhängiger Vorfilter ist zwar möglich, sie verhindern dann aber die flexible Anpassung an die verwendete Steuerfrequenz.

Der Erfindung liegt die Aufgabe zugrunde, das Eingangssignal mit flexibler Anpassung an die vewendete Steuerfrequenz zu selektieren, ohne es mit großer Stellenzahl umwandeln zu müssen.

Dies wird gemäß Patentanspruch 1 dadurch erreicht, daß die Steuerfrequenz mit einer entsprechend angepaßten Modulationsfrequenz auf eine konstante Zwischenfrequenz als Summen- oder Differenzfrequenz der Steuer- mit der Modulationsfrequenz angehoben und eines der beiden dadurch gebildeten Seitenbänder um mindestens eine Demodulationsfrequenz rückverschoben wird.

Mit der Anwendung eines Überlagerungsverfahrens im Bereich tonfrequenter Rundsteueranlagen wird die ausgewählte Steuerfrequenz auf eine festgelegte Zwischenfrequenz angehoben. Eine Anpassung des Empfängers an unterschiedliche Steuerfrequenzen kann daher durch Verändern der Modulationsfrequenz erfolgen. Das Selektieren des Eingangssignals kann dann bei jeder Steuerfrequenz mit einem in der Frequenz konstanten Zwischenfrequenzfilter begonnen werden, das nicht mehr eigens angepaßt werden muß. Anschließend wird nur ein Teil eines der beiden Seitenbänder rückverschoben, um eine Frequenzüberlagerung zu vermeiden, die beim Umklappen eines zu breiten Frequenzbandes bei 0 Hz entsteht. Das direkte Selektieren des Eingangssignals im Zwischenfrequenzbereich würde sehr hohe Anforderungen an die Güte des verwendeten Filters stellen, da die selbe absolute Genauigkeit der Bandbreite und Stabilität der Mittenfrequenz des Filters bei einer vielfach höheren Trägerfrequenz zu erfüllen wäre. Die Filtergüte wäre daher um den Faktor der Frequenzerhöhung zu steigern.

Die Steuerfrequenz wird leichter als bei direkter, unmodulierter Filterung selektierbar, wenn die Zwischenfrequenz auf eine kleinere Frequenz als die Steuerfrequenz rückverschoben wird. In diesem Fall ist die Anforderung an Stabilität der Mittenfrequenz und Bandbreite des zu verwendenden Filters geringer, als bei einer direkten Verarbeitung der Steuerfrequenz. Die Konstanz der Verschiebefrequenzen zueinander wird dadurch gewährleistet, daß die Modulations- und die Demodulationsfrequenz durch Teilung aus einer gemeinsamen Stammfrequenz erzeugt werden.

Das Überlagerungsverfahren kann mit Schaltern realisiert werden, wenn das Eingangssignal von einem Rechecksignal mit Modulations-und Demodulationsfrequenz angehoben und rückverschoben wird. Dabei treten Mischprodukte mit höheren Frequenzen auf, die eine Mehrdeutigkeit des Eingangssignals ermöglichen. Diese Frequenzen liegen aber oberhalb des rückzuverschiebenden Seitenbandes und werden somit hinreichend gedämpft. Die Eindeutigkeit des Eingangssignales ist daher trotzdem gewährleistet. Das Eingangssignal wird durch das Tastverhältnis der Modulations- bzw. Demodulationsstufe einstellbar abgeschwächt, da bei einem Verhältnis 1:1 ein Maximum auftritt. Dadurch kann die Ansprechspannung des Empfängers, d.h. die gerade noch ermittelbare Signalspannung eingestellt werden.

Es können geringere Güteanforderungen an die zugehörigen Filter gestellt werden, wenn das Eingangssignal in mehreren Schritten um Teilfrequenzen rückverschoben wird.

Zur Durchführung des Verfahrens ist mit dem Eingang einer Empfangsvorrichtung ein Tiefpaßfilter verbunden, dessen Ausgang mit einer seriellen Anordnung aus einem Modulator mit nachgeschaltetem ersten Bandpaßfilter und je Demodulationsstufe mit einem Demodulator mit nachgeschaltetem weiterem Bandpaßfilter verbunden ist.

Das Tiefpaßfilter dämpft höhere Störfrequenzen, und der Frequenzbereich des modulierten Eingangssignals wird freigehalten. Durch das erste Bandpaßfilter und die vorhandenen Demodulationsstufen wird ein Analysator gebildet, der aus der konstanten Zwischenfrequenz die Steuerfrequenz selektiert. Zur Verbesserung des Signal/Rauschverhältnisses und einer Amplitudenkomprimierung ist das Tiefpaßfilter zur Sperre der Netzfrequenz um ein Hochpaßfilter erweitert.

An Stellen, wo noch ein großer Amplitudenanteil der Netzfrequenz auftritt, ist es vorteilhaft, daß Filter als aktive RC-Filter aufgebaut sind. Diese weisen einen großen Eingangsspannungs- bzw. Dy-namikbereich auf. Bei ausreichender Störsignal-dämpfung ist mindestens ein, vorzugsweise das letzte, niederfrequente Bandpaßfilter als digitales Filter aufgebaut. Dadurch ist es möglich, daß die Filterkurve bzw. die für das Eingangssignal relevante Bandbreite und die Dämpfung von Signalen außerhalb der Steuerfrequenz durch geeignete digitale Parameter mit hoher Güte einstellbar ist, wobei das letzte Filter die Bandbreite der gesamten Filterung bestimmt.

In der Empfangsvorrichtung ist bei mehreren zu detektierenden Steuerfrequenzen eine Modulationsstufe je Steuerfrequenz vorhanden. Es genügt, alle verwendeten Steuerfrequenzen mit gleicher Bandbreite auf eine gemeinsame Zwischenfrequenz anzuheben, um eine von mehreren zu empfangen. Jedes ankommende Signal wird dann auf gleiche weise analysiert. Sollen verschiedene Steuerfrequenzen unabhängig voneinander ausgewertet werden, so sind sie auf unterschiedliche Zwischenfrequenzen anzuheben und von getrennten Analysatoren zu selektieren.

Die Erfindung wird anhand von zwei Ausführungsbeispielen und Zeichnungen näher erläutert. Es zeigen:

Fig. 1 ein schematisches Blockschaltbild des ersten Ausführungsbeispieles,

Fig. 2 die entsprechende Schaltung und

Fig. 3 die Lage der Frequenzbänder,

Fig. 4 das schematische Blockschaltbild des zweiten Ausführungsbeispieles und

Fig. 5 die entsprechende Lage der Frequenzbänder.

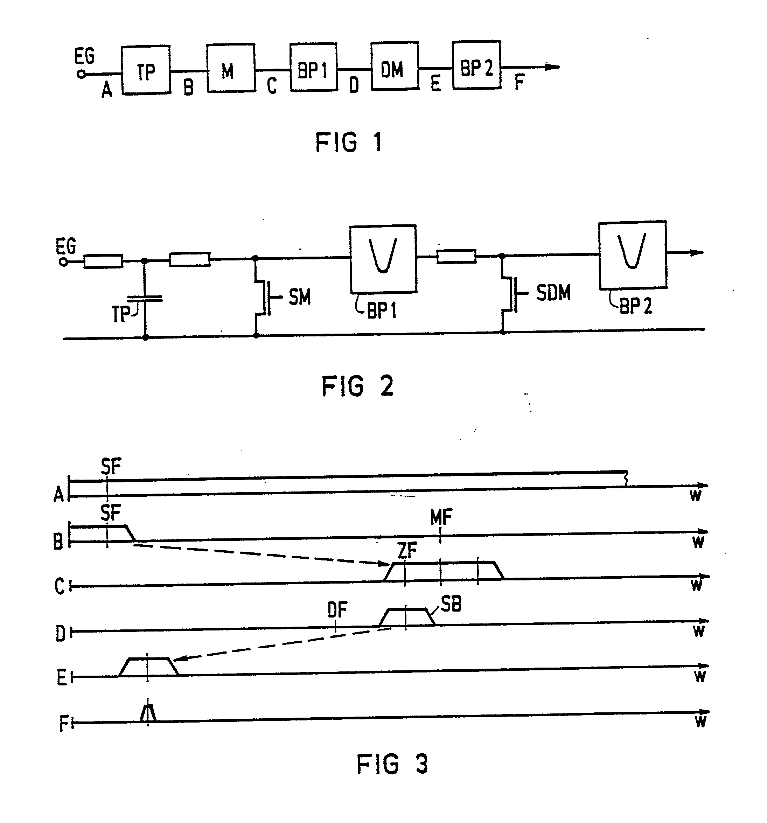

Anhand des Blockschaltbildes in Fig. 1 und der frequenzmäßigen Darstellung von Signalen in Fig. 3 wird die Anwendung der Erfindung an einem Rundsteuerempfänger erläutert. Die an den Punkten A, B, C, D, E, F in Fig. 1 auftretenden Frequenzen sind in Fig. 3 in den Skalen A, B, G, D, E, F dargestellt.

Das an einem Eingang EG des Rundsteuerempfängers anliegende Signal enthält ein tonfrequentes Eingangssignal mit einer Steuerfrequenz SF von 175 Hz. Die Bandbreite beträgt 5 Hz und dient der Anpassung des Einschwingverhaltens von Filtern an die Impulsdauern der Steuerimpulse. Ein Tiefpaßfilter TP entfernt die höherfrequenten Störsignale und gegebenenfalls auch die Netzfrequenz von 50 Hz. Das derart begrenzte Signal wird durch einen Modulator M mit der Modulationsfrequenz MF auf eine Zwischenfrequenz ZF angehoben. Sie liegt im unteren Seitenband SB und ergibt sich als Differenz der Steuer- mit der Modulationsfrequenz SF, MF. In einem ersten Bandpaßfilter BP1 wird das untere Seitenband SB selektiert und in einem Demodulator DM um eine Demodulationsfrequenz DF auf eine Endfrequenz EF rückverschoben. Da durch das Überlagerungsverfahren zunächst Mehrdeutigkeiten hervorgerufen werden, ist das erste Bandpaßfilter BP1 so auszulegen, daß es für die dreifache Modulationsfrequenz MF vermindert um die Bandbreite des eingangsseitigen Tiefpaßfilters TP eine ausreichende Dämpfung bewirkt. Ein in der tiefen Frequenzlage arbeitendes, zweites Bandpaßfilter BP2 bestimmt die Bandbreite des selektierten Eingangssignales. Die Abstimmung des Tiefpaßfilters TP und/oder des ersten Bandpaßfilters BP1 ist zusammen mit der Modulations- und Demodulationsfrequenz MF, DF so zu wählen, daß nur der ursprünglich zur Steuerfrequenz SF gehörende Signalanteil und kein anderes, durch das Überlagerungsverfahren erzeugte Mischprodukt in das zweite Bandpaßfilter BP2 gelangt. Dazu gehört insbesondere eine Spiegelfrequenz am Eingang der Gesamtanordnung, die nach der mehrmaligen Verschiebung der Rechnung nach mit der negativen Frequenz (d.h. phasengedreht) des zweiten Bandpaßfilters BP2 erscheint.

Sollte das Eingangssignal ohne Demodulationsstufe direkt in einem Zwischenfrequenzfilter analysiert werden, wären an dieses sehr hohe Anforderungen zu stellen. Bei einer Steuerfrequenz SF von 175 Hz und einer Bandbreite von 5 Hz ergibt sich eine Güte von Q = 35. Eine Stabilität der Steuerfrequenz SF von + 0,1 % bedeutet 0,175 Hz. Die Verschiebung auf eine Zwischenfrequenz ZF von 10 kHz ergibt dann für einen konstanten Analysator eine Güte von (10000 : 5) 0 = 2000 und eine Stabilität von (0,175:10000) 0,00175 %. Durch die Verwendung einer Demodulationsstufe bleiben die Anforderungen an die Filter in einem leichter realisierbaren Bereich. So kann beispielsweise die Endfrequenz EF kleiner als die Steuerfrequenz SF gewählt werden. Die Forderung an Selektivität und Stabilität ist dann sogar einfacher erfüllbar, als bei direkter Analyse des Eingangssignals ohne Überlagerungsverfahren. Mit einer Endfrequenz EF von 70 Hz betrüge die geforderte Güte (70:5) Q = 14 und die Stabilität (0,175 : 70) 0,25 %. Aufgrund von auftretenden Schwebungen und Störanteilen der Netzoberschwingungen kann von diesen Vorteilen aber nicht immer voll Gebrauch gemacht werden.

Fig. 2 zeigt schematisch die Schaltung des ersten Ausführungsbeispieles. Mit Hilfe elektronischer Modulations- und Demodulationsschalter SM, SDM wird das Eingangssignal moduliert und demoduliert. Durch diese Schalter ist die Modulation leichter realisierbar, als mit einem Generator einer Sinusfunktion. Es treten jedoch Mischprodukte bei höheren Frequenzen auf, die eine Mehrdeutigkeit des Eingangssignals bedeuten. Da sie jedoch, wie die Fourier-Reihe zeigt, erst ab etwa der dreifachen Modulationsfrequenz auftreten, werden sie durch die Bandpaßfilter BP1, BP2 hinreichend gedämpft. Eine Abschätzung der Toleranzen der Modulations- und Demodulationsfrequenz ergibt einen Restfehler der letztlich resultierenden Verschiebungsfrequenz von MF-DF. Modulations- und Demodulationsfrequenzen werden durch unterschiedliche Teilung aus einer gemeinsamen Stammfrequenz hergeleitet. Bei der relativen Genauigkeit gebräuchlicher Oszillatoren ($10^{-4}$ - $10^{-6}$) ist der Restfehler vernachlässigbar.

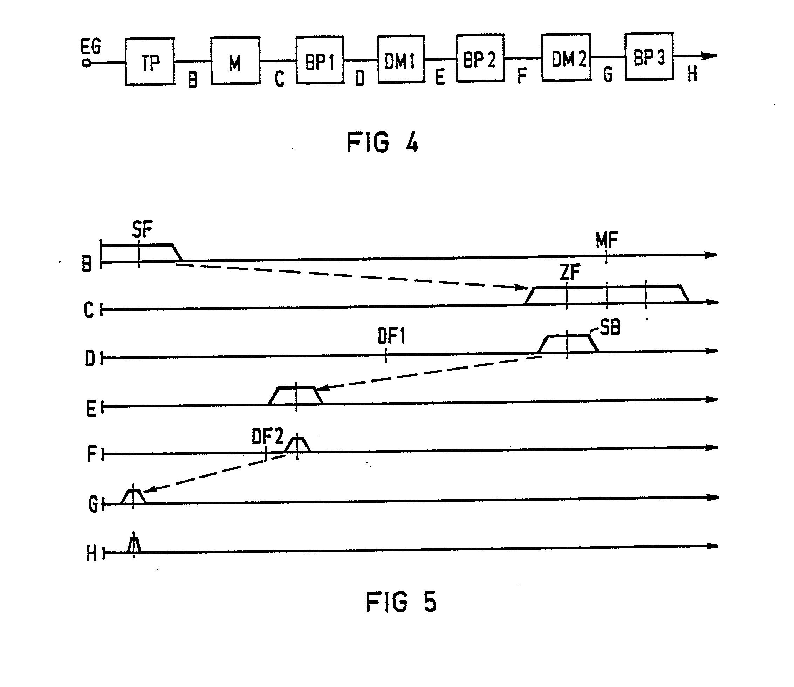

Der Rundsteuerempfänger des zweiten Ausführungsbeispieles wird gleichfalls anhand des schematischen Blockschaltbildes in Fig. 4 und der frequenzmäßigen Darstellung der Signale in Fig. 5 erläutert.

Das durch das Tiefpaßfilter TP begrenzte Eingangssignal mit der Steuerfrequenz SF wird in einer Stufe vom Modulator M mit der Modulationsfrequenz MF auf die Zwischenfrequenz ZF angehoben. Da die folgende Demodulation in zwei Stufen erfolgt, kann das erste Bandpaßfilter BP1 eine breitere Durchlaßcharakteristik aufweisen. Die Anforderungen an Güte und Stabilität dieses wie der folgenden Filter können reduziert werden. Die Rückverschiebung des Seitenbandes SB erfolgt über einen ersten Demodulator DM1 mit zweitem Bandpaßfilter BP2 und einen zweiten Demodulator DM2 mit dritten Bandpaßfilter BP3. Zweckmäßigerweise wird das Frequenzverhältnis zwischen den beiden Demodulationsstufen zwischen 5 und 20 gewählt. Die Demodulation erfolgt mit einer ersten und zweiten Demodulationsfrequenz DF1, DF2. Die Endfrequenz EF von 70 Hz liegt unterhalb der Steuerfrequenz SF von 175 Hz.

**Ansprüche**

1. Verfahren rum Empfangen und Filtern eines tonfrequenten Eingangssignals mit mindestens einer Steuerfrequenz (SF), die aus einem Frequenzband ausgewählt und festgelegt wird, **dadurch gekennzeichnet,** daß die Steuerfrequenz (SF) mit einer entsprechend angepaßten Modulationsfrequenz (MF) auf eine konstante Zwischenfrequenz (ZF) als Summen- oder Differenzfrequenz der Steuer- mit der Modulationsfrequenz (SF,MF) angehoben und eines der beiden dadurch gebildeten Seitenbänder (SB) um mindestens eine Demodulationsfrequenz (DF) rückverschoben wird.

2. Verfahren nach Anspruch 1, **dadurch gekennzeichnet,** daß die Zwischenfrequenz (ZF) auf eine kleinere Frequenz als die Steuerfrequenz (SF) rückverschoben wird.

3. Verfahren nach Anspruch 1 oder 2, **dadurch gekennzeichnet,** daß die Modulations- und die Demodulationsfrequenz (MF,DF) durch Teilung aus einer gemeinsamen Stammfrequenz erzeugt werden.

4. Verfahren nach einem der vorherigen Ansprüche, **dadurch gekennzeichnet,** daß das Eingangssignal von einem Rechtecksignal mit Modulations- und Demodulationsfrequenz (MF,DF) angehoben und rückverschoben wird.

5. Verfahren nach Anspruch 4, **dadurch gekennzeichnet,** daß das Eingangssignal durch das Tastverhältnis der Modulations- bzw. Demodulationsstufe einstellbar abgeschwächt wird.

6. Verfahren nach einem der vorherigen Ansprüche, **dadurch gekennzeichnet,** daß das Eingangssignal in mehreren Schritten um Teilfrequenzen rückverschoben wird.

7. Vorrichtung zur Durchführung des Verfahrens nach einem der vorherigen Ansprüche, **dadurch gekennzeichnet,** daß mit dem Eingang (EG) einer Empfangsvorrichtung ein Tiefpaßfilter (TP) verbunden ist, dessen Ausgang mit einer seriellen Anordnung aus einem Modulator (M) mit nachgeschaltetem ersten Bandpaßfilter (BP1) und je Demodulationsstufe mit einem Demodulator (DM,DM1,DM2) mit nachgeschaltetem weiterem Bandpaßfilter (BP2, BP3) verbunden ist.

8. Vorrichtung nach Anspruch 7, **dadurch gekennzeichnet,** daß das Tiefpaßfilter (TP) zur Sperre der Netzfrequenz um ein Hochpaßfilter erweitert ist.

9. Vorrichtung nach Anspruch 7 oder 8, **dadurch gekennzeichnet,** daß Filter (TP, BP1, BP2, BP3) als aktive RC-Filter aufgebaut sind.

10. Vorrichtung nach einem der Ansprüche 7 bis 9, **dadurch gekennzeichnet,** daß mindestens ein, vorzugsweise das letzte, niederfrequente Bandpaßfilter (BP2, BP3) als digitales Filter aufgebaut ist.

11. Vorrichtung nach einem der Ansprüche 7 bis 10, **dadurch gekennzeichnet,** daß in der Empfangsvorrichtung bei mehreren zu detektierenden Steuerfrequenzen (SF) eine Modulationsstufe je Steuerfrequenz vorhanden ist.

88 P 7015

FIG 1

FIG 2

FIG 3

38 P 7015

EG ○──[ TP ]──B──[ M ]──C──[ BP1 ]──D──[ DM1 ]──E──[ BP2 ]──F──[ DM2 ]──G──[ BP3 ]──H──→

## FIG 4

## FIG 5